# EUROPEAN PATENT APPLICATION

(11) **EP 4 183 620 A1**
(43) Date of publication of application: **24.05.2023**
(21) Application number: 21843044.5
(22) Date of filing: 13.07.2021
(51) Int. Cl.: B60L 53/60, B60L 53/80, G06Q 10/02

(54) **SYSTEM FOR EXCHANGING BATTERIES IN ELECTRIC VEHICLES AND METHOD FOR IMPLEMENTING SAME**

(30) Priority: 17.07.2020 ES 202030745
(71) Applicant: SCUTUM LOGISTIC, S.L., 08950 Esplugues de Llobregat Barcelona (ES)
(72) Inventor: SOTELO ROSELL, Carlos, 08950 ESPLUGUES DE LLOBREGAT (ES)
(74) Representative: Toro Gordillo, Ignacio Maria
(86) International application number: PCT/ES2021/070513
(87) International publication number: WO 2022/013471

(57) **Abstract**

Disclosed is a system comprising a central server (1) and a plurality of service stations (2), winch stations are formed from one or more lines of charging modules (3). The modules are connected to a module for communicating with the central server (1), which can be accessed using a computer application, by means of a mobile phone (4), tablet or any suitable electronic device, to engage the appropriate service for replacing batteries (5). The charging modules (3) include means for electrically recharging the batteries, electromechanical means for locking and unlocking the batteries, and an audiovisual interface (8). The batteries (5) include a telescopic handle (10) for manual transport and a lockable rolling structure (11) that can be folded and unfolded, for moving the battery horizontally from an insertion area in the vehicle to the charging module at the same height.

## Description

### TECHNICAL FIELD

The present invention relates to a system especially designed for the exchange or replacement of batteries in light electric vehicles, mainly electric motorcycles, but also in other types of two-, three- or four-wheeled vehicles, which are adapted for the use of batteries, such as the ones described in this specification.

The object of the invention is to provide an intelligent system of electric battery chargers, involving a series of battery supply stations, remotely managed through a server, and wherein the services thereof can be hired using a computer application, for example through a user's mobile phone, allowing the user to check the availability and proximity of batteries for their vehicle.

The invention also affects the special configuration of both the stations and the batteries, so that they can be easily and effortlessly replaced, the stations not requiring service personnel, such that different brands can use the same battery *"standard"*, thus allowing for the rapid development of electric mobility in cities, metropolitan areas and roads in general.

### BACKGROUND OF THE INVENTION

As is known, the use of electric vehicles is increasing due to the environmental advantages that the use thereof entails, both in terms of air pollution and noise pollution.

The main problem with these vehicles is the limited autonomy of the batteries thereof, which autonomy increases as the weight of the vehicle decreases.

This problem is compounded by the amount of time it takes to fully charge a battery or group of batteries of this type, and that is surely the reason why the use of these types of vehicles is not fully widespread.

As a way to deal with this problem, vehicles that incorporate removable batteries are known, and thus, by means of service stations specifically designed for this purpose, discharged batteries can be replaced by charged batteries, allowing the vehicle to continue running without wasting time recharging said batteries.

The problem with these types of vehicles is that the batteries thereof are not easily accessible, and furthermore, it must be taken into account that these batteries are very heavy. Therefore, the replacement thereof requires a major effort, in some cases requiring specific machines or tools for said replacement.

With the aim of mitigating this problem, electric batteries equipped with wheels are known, and although they facilitate the transfer of the battery from one place to another, they still have the inherent problem in that said battery must be moved upwards once arranged in the insertion area, which continues to require a significant effort.

### DESCRIPTION OF THE INVENTION

The proposed system for exchanging batteries in electric vehicles satisfactorily solves the aforementioned problem on the basis of a simple yet effective solution.

In doing so, the system of the invention is made up of a series of stations equipped with a module for communicating with a central server, which can be accessed using a computer application by means of a mobile phone, tablet or any suitable electronic device to engage the appropriate service for replacing batteries.

More specifically, each battery station is made up of a plurality of charging modules, embodied in a casing equipped with locking and unlocking means for the electric batteries, such that a plurality of charging modules with batteries will be established at each station, with the special feature that at least one of said modules is always empty, meaning without a battery, in order to facilitate the insertion of the discharged vehicle battery to be replaced by another, said inserted battery being subjected to a new charging process.

Thus, in each charging module, means for electrically recharging the battery will be established, preferably with high amperage, in order to minimise charging times, the modules being fixed to each other, as well as to the ground and/or wall, to avoid the manipulation thereof.

In order to minimise implementation costs, it is envisaged that it is only necessary for one of the charging modules to include a communication module, the rest of the modules being connected to each other, yet each one has the individual electrical panel thereof and serial port thereof for a technician to be able connect to perform maintenance or repair work.

Said modules incorporate an easy-to-use audiovisual interface, by means of which the different states of the modules can be identified, either to indicate that certain batteries are already reserved, that the module is locked, that it is unlocked, out of service, free or without energy.

In turn, the batteries themselves will have LED indicators by means of which the charge level of said batteries can be displayed.

Consequently, in correspondence with the front face of each charging module, a wide opening is established to receive the corresponding electric batteries, and guides are established in the same in order to facilitate the insertion and locking of said batteries.

These guides will be assisted by electromechanical anchoring means, thereby ensuring that if the battery is not perfectly inserted, locked and validated, no current is supplied to the battery. The batteries will also include means for the electrical locking thereof.

In this sense, each module will incorporate a relay in the DC bus between the charger and the connector, by means of which power is supplied to or cut from the batteries.

With regard to the batteries, they will be equipped with a handle for manual transport and a lockable rolling structure that can be folded and unfolded, which allow the battery to be moved horizontally from the vehicle to the charging module without having to exert vertical force on said battery, the rolling structure that can be folded and unfolded adapting to the height of the area where the battery is inserted in the motorcycle or vehicle in question with respect to the ground, having envisaged that the battery receiving guides in the charging modules are also at the same height.

With regard to the communication module, a communication application will be developed for the different charging and centralisation modules, all controlled by the central server of the system. In the case that communication is cut from the central server, the installation will be locked until communication is re-established. Likewise, and for safety reasons, when the modules are empty, the power supply thereof will be cut.

Optionally, the stations could be electrically powered through photovoltaic panel installations.

On the basis of this structure, the operation is as follows:
It will be mandatory to make a pre-reservation through the computer application installed on a mobile phone or other device in order to facilitate the process.

In the pre-reservation, the locations of the charging stations will be displayed according to the current GPS position of the user, the availability and range of the vehicle with the current battery level.

Pre-reservations will expire and be cancelled after 15 minutes or according to the estimated time of arrival. The user will be notified through the application of any anomaly related to this pre-reservation.

The application will show the position and row of the pre-reservation at the chosen location and the time limit in which the battery must be picked up.

In the pre-reservation, the user's subscription modality and payment status will be validated.

If the user is not registered, the system will notify the non-registered user in this service and will release the initially inserted battery (the battery to be replaced), requiring registration in the system.

Pre-reservations will automatically be for a single battery if it is a 2- or 3-wheeled vehicle, or for two batteries if it is a 4-wheeled vehicle, all able to be viewed through the computer application.

The system will deliver the batteries according to a FIFO (first in, first out) algorithm, to rotate and use of all the batteries.

The system will propose batteries at 100% charge, and if they are not available, it will allow the % of the batteries with the fullest charge to be previewed through the application for the user to decide.

By locating the discharged battery in the free position of the corresponding charging module, it will be physically and electronically locked, and the data of the battery will be taken with regard to the current charge, the battery ID, and the user associated with the pre-reservation. At the end of the check, power will be supplied to the battery to avoid unwanted connections, direct connections, connections with cables or other types of electrical accidents.

To validate the user's pre-reservation, the system sends the information to the charging module so that the exchange can be done without the need for a subsequent connection. The battery will be assigned and the data will be run at the station.

The station will send a notification regarding the charging module, and if there is no connection at that time, it will save the notification and notify the central server at a later time.

The change in the battery ID will be updated on the server, and the prereserved battery will be automatically unlocked.

When the charged battery is in the motorcycle or vehicle in question, the change will be confirmed in the server.

In the case of attempted theft or non-payment, the battery will be locked in the exchange process, alerting the central server, as well as the technical service, emitting a warning sound for a pre-programmed time.

If after inserting the battery the user does not pick up the new battery in a pre-established time, the charging module will emit a warning sound.

When finished, the server will send a notification through the application with the data of the exchange and charging percentages of the two batteries (inserted/removed), or other information, such as relevant traceability for the user.

Through the computer application, it will be possible to notify mechanical failures of the battery, so that when it is delivered to a station it will be locked.

In this situation, the user takes a different battery and an alert notification of the incident will be sent to the technical service.

In short, a connected battery can be locked for three reasons: exceeding the pre-established time, theft, or user notification of mechanical failure.

This way, a very convenient system for exchanging batteries is achieved, which is highly noteworthy for improving autonomy when travelling in electric vehicles.

### DESCRIPTION OF THE DRAWINGS

To complement the description that will be provided below and for the purpose of helping to better understand the features of the invention according to a preferred practical embodiment thereof, a set of drawings is attached as an integral part of said description in which the following is depicted in an illustrative and non-limiting manner:
Figure 1 shows a schematic view of a battery exchange system in electric vehicles in accordance with the object of the present invention.
Figure 2 shows a perspective view of one of the charging modules used at one of the stations of the system, specifically in the case where there is a free space for receiving a battery that has been discharged or is in bad condition.
Figure 3 shows a perspective view of one of the charging modules used at one of the stations of the system, specifically in the case where the module is occupied and in the process of charging a battery.
Figure 4 shows a similar view to that of figure 3, but in which the battery is fully charged.
Figure 5 shows a similar view to that of figure 4, but in which the battery is reserved.
Figure 6 shows a similar view to that of figure 3, but at the specific moment in which the charging module indicates that it is possible to remove the charged battery.
Figure 7 shows a similar view to that of the previous figure, but in the case where the battery is locked, for example because it is damaged.
Figure 8 shows a similar view to that of figure 2, but corresponding to a charging module that is out of order.

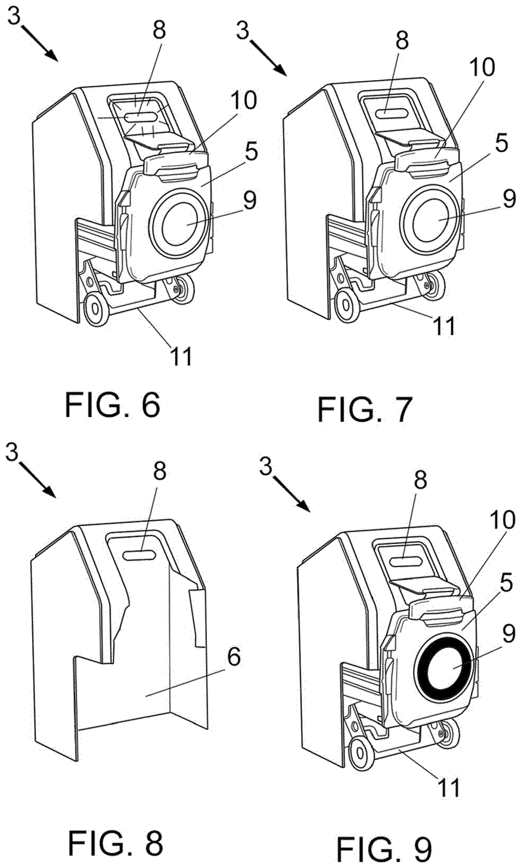

Lastly, figure 9 shows an example of a charging module without power.

### PREFERRED EMBODIMENT OF THE INVENTION

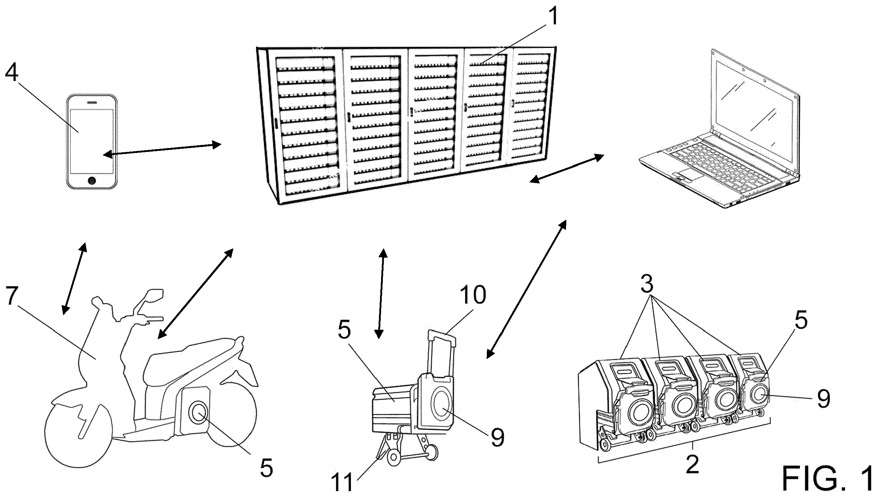

In light of the mentioned figures, especially figure 1, it can be seen how a central server (1) is used in the system of the invention, as well as a plurality of service stations (2), which stations are formed from one or more lines of charging modules (3), said modules connected to a module for communicating with the central server, which can be accessed using a computer application by means of a mobile phone (4), tablet or any suitable electronic device, to engage the appropriate service for replacing batteries (5).

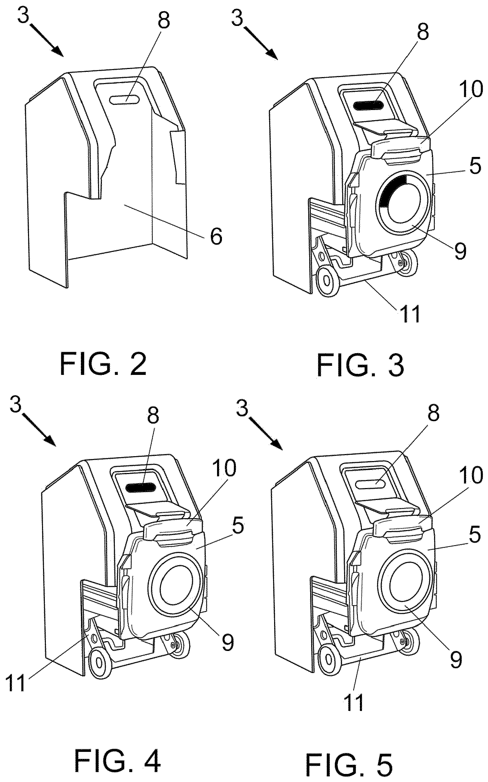

As can be seen in figures 2 to 9, the charging modules (3) are made up of a casing, the front face of which has an opening (6), equipped with guide means for the insertion and removal of the corresponding electric battery (5), having envisaged that at each station at least one of the charging modules (3) is empty to allow the battery of the electric vehicle (7) in question to be inserted.

The charging modules (3) include means for electrically recharging the batteries, electromechanical means for locking and unlocking the batteries, an individual electrical panel and a serial port for the maintenance technician to be able to connect, incorporating an easy-to-use audiovisual interface (8), by means of which the different states of the modules may be identified, either to indicate that there is a free space (figure 2), that the battery of said module is charging (figure 3), that the battery of said module is fully charged (figure 4), that the battery of said module is reserved (figure 5), that the battery of said module can be removed (figure 6), that the battery of said module is locked (figure 7), that the module is out of service (figure 8) or that the battery module assembly is without power (figure 9).

With regard to the batteries (5), they will incorporate means for the electrical locking thereof, as well as LED indicators (9) by means of which the charge level of said batteries can be displayed, being equipped with a telescopic handle (10) for manual transport and a lockable rolling structure (11) that can be folded and unfolded, which allow the battery to be moved horizontally from the vehicle to the charging module without having to exert vertical force on said battery, the rolling structure that can be folded and unfolded adapting to the height of the area where the battery is inserted in the motorcycle or vehicle in question with respect to the ground, having envisaged that the battery receiving guides in the charging modules are also at the same height, the handle (10) including a trigger or release element of said mechanism which, in the act of inserting the battery in the vehicle (7), allows said structure to collapse during the coupling operation.

Lastly, the stations could optionally be electrically powered through photovoltaic panel installations.

## Claims

1. A system for exchanging batteries in electric vehicles, **characterised in that** it comprises a central server (1) and a plurality of service stations (2), which stations are formed from one or more lines of charging modules (3), said modules connected to a module for communicating with the central server (1), which can be accessed using a computer application by means of a mobile phone (4), tablet or any suitable electronic device, to engage the appropriate service for replacing batteries (5), with the particular feature **in that** the charging modules (3) are made up of a casing, the front face of which has an opening (6), equipped with guide means for the insertion and removal of the corresponding electric battery (5), charging modules (3) that include means for electrically recharging the batteries, electromechanical means for locking and unlocking the batteries, an individual electrical panel and a maintenance serial port, incorporating an audiovisual interface (8) for identifying the different states of the modules and batteries, having envisaged that the batteries (5) include means for the electrical locking thereof, LED indicators (9) by means of which the charge level of said batteries can be displayed, including a telescopic handle (10) for manual transport and a lockable rolling structure (11) that can be folded and unfolded, for moving the battery horizontally from an insertion area in the vehicle to the charging module at the same height.

2. The system for exchanging batteries in electric vehicles according to claim 1, **characterised in that** the service stations are electrically powered through photovoltaic panel installations.

3. A method for implementing the system of claims 1 and 2, **characterised in that** the following operational phases are established in the same:
a) A pre-reservation is made through the computer application installed on the mobile phone (4) or device in question;
b) In the pre-reservation, the locations of the charging stations are displayed according to the current GPS position of the user, the availability and range of the vehicle with the current battery level. Pre-reservations will expire and be cancelled after 15 minutes or according to the estimated time of arrival. The user will be notified through the application of any anomaly related to this pre-reservation;
c) The application shows the position and row of the pre-reservation at the chosen location and the time limit in which the battery must be picked up.
d) In the pre-reservation, the user's subscription modality and payment status will be validated;
e) If the user is not registered, the system will require registration in the system;
f) The system will deliver the batteries according to a FIFO (first in, first out) algorithm, to rotate and use of all the batteries;
g) The system will propose batteries at 100% charge, and if they are not available, it will allow the % of the batteries with the fullest charge to be previewed through the application for the user to decide;
h) By locating the discharged battery in the free position of the corresponding charging module, it will be physically and electronically locked, and the data of the battery will be taken with regard to the current charge, the battery ID, and the user associated with the pre-reservation. At the end of the check, power will be supplied to the battery to avoid unwanted connections, direct connections, connections with cables or other types of electrical accidents;
i) To validate the user's pre-reservation, the system sends the information to the charging module so that the exchange can be done without the need for a subsequent connection. The battery will be assigned and the data will be run at the station;
j) The station will send a notification regarding the charging module, and if there is no connection at that time, it will save the notification and notify the central server at a later time;
k) The change in the battery ID will be updated on the server, and the prereserved battery will be automatically unlocked:
l) When the charged battery is in the motorcycle or vehicle in question, the change will be confirmed in the server;
m) In the case of attempted theft or non-payment, the battery will be locked in the exchange process, alerting the central server, as well as the technical service, emitting a warning sound for a pre-programmed time;
n) If after inserting the battery the user does not pick up the new battery in a pre-established time, the charging module will emit a warning sound;
o) When finished, the server will send a notification through the application with the data of the exchange and charging percentages of the two batteries (inserted/removed), or other information, such as relevant traceability for the user.
